# EUROPÄISCHE PATENTSCHRIFT

(11) **EP 2 314 442 B1**
(45) Veröffentlichungstag und Bekanntmachung des Hinweises auf die Patenterteilung: **03.04.2013**
(21) Anmeldenummer: 09173921.9
(22) Anmeldetag: 23.10.2009
(51) Int. Cl.: B29C 55/00, B41M 5/00

(54) **Vernetzerbatches, enthaltend markierende Substanzen, neue vernetzbare Kautschukmischungen und ein Verfahren zu deren Herstellung und deren Verwendung**
Cross link batches containing marker substances, new cross linkable rubber mixtures and a method for producing and using same
Ensemble de réseaux comprenant des substances marquantes, des nouveaux mélanges de caoutchouc en réseau et son procédé de fabrication et d'utilisation

(43) Veröffentlichungstag der Anmeldung: 27.04.2011
(73) Patentinhaber: Rhein Chemie Rheinau GmbH, 68219 Mannheim (DE)
(72) Erfinder: Schröder, Adreas Dr., 69221 Dossenheim (DE); Meenenga, Vincenza, 68723 Schwetzingen (DE); Säwe, Martin Dr., 69488 Birkenau (DE)
(74) Vertreter: Siegers, Britta

(56) Entgegenhaltungen:
- WO-A-00/53428
- WO-A-02/03950
- WO-A-2008/040670
- US-A1- 2007 088 095

## Beschreibung

Die Erfindung betrifft neue Vernetzerbatches, enthaltend mindestens eine zur Detektion mittels Ultraschall, Röntgenfluoreszenzanalyse, Nahinfrarotspektroskopie, Laser-Induzierte Plasma Spektroskopie, Terahertz-Spektroskopie und UV/VIS-Spektroskopie geeignete markierende bei Temperaturen < 130°C feste, pulverförmige Substanz mit einer Dichte größer 2 g/cm³, neue vernetzbare Kautschukmischungen und ein Verfahren zu deren Herstellung und deren Verwendung.

Aus PCT/EP2009/058041 ist bekannt, Vernetzerbatches separat herzustellen, um dies den diskontinuierlich hergestellten Kautschukmischungen kontinuierlich zuzuführen. Dieses Verfahren hat zwar den Vorteil, dass so Kautschukmischungen praktikabler und leistungsfähiger hergestellt werden können, allerdings ist nicht oder - wenn überhaupt - nur offline nachweisbar, wie gut der Vernetzerbatch in der Kautschukmischung verteilt ist.

Aufgabe der vorliegenden Erfindung war es daher, neue Vernetzerbatches bereitzustellen, mit denen eine Online-, vorzugsweise auch noch eine Inline-Detektion zur Bestimmung der Güte der Verteilung des Vernetzerbatches möglich ist.

Die dieser Erfindung zugrunde liegenden Aufgabe konnte durch Vernetzerbatches gelöst werden, die bestimmte markierende Substanzen enthalten.

Gegenstand der vorliegenden Erfindung sind daher Vernetzerbatches, bestehend im Wesentlichen aus :
- mindestens einer zur Detektion mittels Ultraschall, Röntgenfluoreszenzanalyse, Nahinfrarotspektroskopie, Laser-Induzierte Plasma Spektroskopie, Terahertz-Spektroskopie und UV/VIS-Spektroskopie geeigneten markierenden,bei Temperaturen < 130°C festen, pulverförmigen Substanz mit einer Dichte größer 2 g/cm³. ausgewählt aus der Gruppe der Alkali- und Erdalkaliverbindungen, Verbindungen der Nebengruppen des Periodensystems der Elemente, Verbindungen der Seltenen Erden, Schwermetallpulver, gecoatete Metallpulver und/oder deren Verbindungen, Bleiverbindungen, anorganische Bismutverbindungen, Metall-Carbide und/oder natürlich vorkommenden Mineralien,
- mindestens einem Vernetzungsmittel, ausgewählt aus der Gruppe Schwefel, Peroxide, Metalloxide, Dithiocarbamate, Thiurame, Thioharnstoffe, Mercaptobeschleuniger, Sulfenamide, Thiophosphat- und Dithiophosphat-Beschleuniger und/oder Guanidine,
- mindestens einem Polymer ausgewählt aus der Gruppe:
   Naturkautschuk (NR), Isoprenkautschuk (IR), Styrol-Butadien-Kautschuk (SBR), Butadienkautschuk (BR), Isopren-isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxyliertere Acrylnitril-Butadien-Kautschuk (HXNBR), Ethylen-Propylen-Dien-Kautschuk (EPDM), Ethylen-Propylen-Kautschuk (EPM), Fluorkautschuk (FKM), Perfluorierter Fluorkautschuk (FFKM), Acrylat-Ethylen-Kautschuk (AEM), Acrylatkautschuk (ACM), Ethylen-Methylen-Acrylatkautschuk (EMA), chloriertes Polyethylen, chlorsulfoniertes Polyethylen, Ethylen-Vinylacetat-Kautschuk (EVA), Ethylen-Epichlorhydrin Kautschuk (ECO), Epichlorhydrin-Kautschuk (CO) und/oder Polyurethan-Kautschuk (PU), und
- gegebenenfalls Weichmachern, Stabilisatoren, Füllstoffen und/oder weiteren Hilfsmitteln.

Als markierende pulverförmige Substanz im Sinne der Erfindung ist vorzugsweise mindestens eine Verbindung ausgewählt aus den folgenden Gruppen bevorzugt, :
- bei den Alkali- und Erdalkaliverbindungen Aluminate, Halogenide, Sulfate, Silikate, Carbonate, Oxide und/oder Sulfide des Cäsiums, Calciums, Strontiums und/oder des Bariums, besonders bevorzugt Bariumsulfat, Bariumoxid, Bariumsulfid und/oder Bariumsilikat und/oder Strontiumaluminate, besonders bevorzugt mit seltenen Erden dotierte Strontiumaluminaten,
- bei den Verbindungen der Nebengruppen des Periodensystems der Elemente, vorzugsweise die der zweiten bis vierten Nebengruppe des Periodensystems der Elemente, besonders bevorzugt Zinkoxid, Zinksulfid, Titandioxid und/oder Zirkondioxid,
- bei den Verbindungen der Seltenen Erden, z.B. Ceroxide und/oder Gadoliniumoxide,
- bei den Schwermetallpulver, z.B. Carbonyleisenpulver, besonders bevorzugt Edelmetallpulver z.B. Tantalpulver, Wolframpulver, Goldpulver, Platinpulver und/oder Iridiumpulver,
- bei den gecoateten Metallpulvern und/oder deren Verbindungen, z.B. phosphatiertes oder mit Siliziumdioxid gecoatetes Eisenpulver,
- bei den Bleiverbindungen, besonders bevorzugt Bleioxide und/oder Bleisulfide,
- bei den anorganischen Bismutverbindungen, besonders bevorzugt Bismutoxide sowie Bismutsulfide,
- bei den Wolframverbindungen, besonders bevorzugt Wolframate, Wolframoxide und/oder-Wolframsulfide,
- bei den Metall-Carbiden, besonders bevorzugt Wolframcarbide und/oder
- bei den natürlich vorkommenden Mineralien, wie z.B. Antimonit, Apatit, Albit, Argentit, Anglesit, Arsenkies, Baryt, Bleiglanz, Cassisterit, Dolomit, Feldspat, Flussspat, Molybdänglanz, Muskovit, Montmorilonit, Monazit, Magensit, Korund, Kryollith, Pyrit, Quarz, Rutil, Scheelit, Speerylith, Strontianit, Tamntalit, Uraninit, Vanadinit, Wismut, Wolframit, Wollastonit, Willemit, Zinnober und/oder Zirkon.

Als markierende Substanzen sind anorganische Verbindungen bevorzugt.
In einer weiteren Ausführungsform der Erfindung ist der Einsatz von oxidationsbeständigen Verbindungen bevorzugt, wobei besonders bevorzugt ist, wenn diese gecoated sind.

Es handelt sich dabei um handelsübliche Substanzen. Das Coating der Pulver erfolgt nach den, dem Fachmann geläufigen Verfahren.

Ebenfalls bevorzugt ist der Einsatz einer Kombination von Verbindungen aus den vorgenannten Gruppen. Unter dem Begriff Kombination ist dabei sowohl eine Kombination aus Verbindungen aus den einzelnen Gruppen oder auch innerhalb der vorgenannten Gruppen sowie eine Kombination daraus umfaßt.

Alle diese markierenden Substanzen weisen vorzugsweise eine Dichte von mindestens 3,5 bis 25 g/cm³ auf, besonders bevorzugt größer 7,5 g/cm³, ganz besonders bevorzugt größer 10 g/cm³.

Bevorzugt sind dabei markierende pulverförmigen Substanzen mit einer Teilchengröße von 0,1 µm bis 100 µm besonders bevorzugt von 1 µ bis 10µm.

Der Begriff pulverförmig umfasst dabei alle bei Temperaturen unterhalb von 130°C festen vorgenannten Substanzen.

Der Anteil an markierenden Substanzen beträgt vorzugsweise weniger als 50 Gew.-%, bevorzugt bei weniger als 10 Gew.-%, besonders bevorzugt weniger als 5 Gew.-%, bezogen auf den Vernetzerbatch.

Die markierenden Substanzen eigen sich dabei vorzugsweise für die Detektion mittels Ultraschall.

Der Begriff Vernetzerbatch umfasst dabei eine Abmischung von mindestens einem Vernetzungsmittel und gegebenenfalls weiteren Additiven.

Der erfindungsgemäße Vernetzerbatch enthält dabei zudem mindestens ein Vernetzungsmittel.

Vernetzungsmittel im Sinne der Erfindung sind:
Netzknotenbildner, wie z.B.
   - Schwefel (löslich oder unlöslich) und/oder Schwefelspender, wie z.B. Dithiomorpholine (DTDM), Tetramethylthiuramdisulphide (TMTD), Tetraethylthiuramdisulphid (TETD), Dipentamethylenthiuramterasulphide (DPTT), und/oder
   - Peroxide, wie z.B. Di-tert.Butyl-Peroxide, Di-(tert,Butyl-Peroxy-Timethyl-Cyclohexane, Di-(tert,Butyl-Peroxy-Isopropyl)benzene, Dicumyl Peroxide, Dimethyl-Di(tert.Butyl-Peroxy)Hexine, Butyl-Di-(tert,Butyl-Peroxy-)Valerate,

Beschleuniger, wie z.B.
- Carbamate bzw. Triazine, wie z.B. Hexamethylen-diamin-carbamat (HMDC), organische Triazine,
- Thiazole, wie z.B. 2-Mercapto-benzothiazol (MBT), Zink-mercaptobenzothiazol (ZnMBT), Thiadiazole (TDD),
- Sulfenamide, wie Cyclohexyl-benzothiazol-Sulphenamide (CBS), Di-benzothiazyl-disulphid (MBTS), Butyl-benzothiazole-Sulphenamide (TBBS), Dicyclohexyl-Benzothiazol-Sulphenamid (DCBS), 2-(4-Morpholinylmercapto)-benzothiazol (MBS),
- Thiurame, wie Tetramethyl-thiuram-monosulphid (TMTM), Tetraethyl-thiuram-disulphid (TETD), Tetramethyl-thiuram-disulphid (TMTD), Tetrabenzylthiuram Disulphid (TBTD), Dipentamethylene-Thiuram-Tetra(Hexa)-Sulphid (DPTT),
- Dithiocarbamate, wie Zn-Dimethyldithiocarbamate (ZDMC), Cu-Dimethyldithiocarbamate, Bi- Dimethyldithio-carbamate, Zn-Diethyldithiocarbamate (ZDEC), Tellurium-diethyldithio-carbamate (TDEC), Zn-Dibuthyldithiocarbamate (ZDBC), Zn-Ethyl-Phenyl-Dithipocarbamate (ZEPC), Zn-Dibenzyl-Dithiocarbamate (ZBEC), Ni-Dibuthyl-Dithiocarbamate (NBC),
- Thiophosphat- und Dithiophosphat, wie z.B. Zink-O,O-di-n-butyl-dithiophosphat (ZBDP), Zink-O-butyl-O-hexyl-dithiophosphat, Zink-O,O-diisooctyl-dithiophosphat (ZOPD), Dodecylammonium-diisooctyl-dithiophosphat (AOPD), wie z.B. die Rhenogran®-Typen ZDT, ZAT, ZBOP der Firma Rhein Chemie Rheinau GmbH,
- Hamstoff/Thiohamstoffe, wie z.B. Ethylenthiohamstoff (ETU), N,N,N'N'-Tetramethylthioharnstoff (TMTU), Diethylthioharnstoff (DETU), Dibutylthioharnstoff (DBTU), 3-(3,4-Dichlorphenyl)-1,1-dimethylharnstoff (Diuron) etc., und/oder
- Guanidine, wie z.B. Diphenylguanidin (DPG) und/oder N',N-di-ortho-tolyl-Guanidin (DOTG) und die Guanidine-frei Ersatzbeschleuniger, wie Rhenogran ® XLA 60 Verzögerer, wie z.B.
- N-Nitrososdiphenylamin, N-Cylcohexylthiophthalimid (CPT), wie z.B. Vulkalent® G), Sulfonamidderivate (wie z.B. Vulkalent ® E/C), Phthalsäureanhydrid (Vulkalent® B/C), wobei die Vulkalent®- Typen beider der Firma Lanxess Deutschland GmbH erhältlich sind, sowie Benzoesäureanhydrid,

Vernetzungsaktivatoren, wie z.B.
- Metalloxide, wie z.B. ZnO, MgO, PbO, CaO als anorganische Aktivatoren.

Bei allen vorgenannten Produkten handelt es sich um handelsübliche Produkte.

Dabei ist es bevorzugt, Mischungen verschiedener Vernetzungsmittel, wie Schwefel, SchwefelSpender, Peroxide oder andere Vernetzer, Beschleuniger wie Dithiocarbamate, Thiurame, Thioharnstoffe, Mercaptobeschleuniger, Sulfenamide, Thio- und Dithio-Phosphate, Guanidine Metalloxide, Fettsäuren und/oder Weichmacher einzusetzen.
Dabei ist eine Mischung aus Vernetzungsmitteln bevorzugt, deren Schmelzpunkt unterhalb von 120°C, besonders bevorzugt unterhalb von 100°C liegt, wie z.B. eine Mischung aus Schwefel, CBS (Cyclohexyl-Benzozthiazyl-Sulfenamid) sowie MBTS (Methylbenzothiazyldisulfid).
In einer weiteren bevorzugten Ausführungsform der Erfindung enthält der erfindungsgemäße Vernetzerbatch zusätzlich, Stabilisatoren und/oder Füllstoffe, Weichmacher sowie weitere Hilfsmittel.

Der Anteil dieser zusätzlichen Bestandteile. liegt vorzugsweise bei weniger als 30 %, bezogen auf den Vernetzerbatch.

Stabilisatoren im Sinne der Erfindung sind z.B. verfärbende und nicht verfärbende Alterungsschutzmittel, wie z.B. Paraphenylendiamine, Isopropylphenylparaphenylendiamin (IPPD), Para-Phenylen-Diamin (6PPD), N,N-ditoly-p-phenylendiamine (DTPD), etc., Amine, wie z.B. Trimethyl-1,2-dihydrochinolin (TMQ), (Phenyl)amine]-1,4-naphthalendion (PAN), Bis(4-octylphenyl)amin (ODPA), styrolisiertes Diphenylamin (SDPA), etc.),
Mono- und Bisphenole, wie z.B. 2,2'-Methylen-bis-(4-methyl-6-tert.butylphenol(BPH), 2,2'-Isobutyliden-bis-(4,6-dimethyl-phenol) (NKF), 2,2'-Dicyclo-pentadienyl-bis-(4-methyl-6-tert.-butyl-phenol) (SKF), 2,2'-Methylen-bis-(4-methyl-6-cyclohexyl-phenol (ZKF), 2,6-Di-tert.-butyl-p-kresol (BHT), substituiertes Phenol (DS), styrolisierte Phenole (SPH), Mercatpbenzimidazole, wie z.B. 2-Mercaptobenzimidazol (MBI), 2-Mercaptomethylbenzimidazole (MMBI), Zink-4- und -5-methyl-2-mercapto-benzimidazole (ZMMBI), etc., Olefine, paraffinische und/oder aromatische Weichmacher. Die Zusammensetzung wird dabei auf das gewünschte Endprodukt abgestimmt.

Füllstoffe im Sinne der Erfindung sind z.B. insbesondere helle anorganische Füllstoffe, wie z.B. Glimmer, Kaolin, Kieselerde, Kieselsäure, Kreide, Talkum, Kohlenstoff-Füllstoffe, wie z.B. Ruß, Graphit, Carbon Nanotubes und/oder magnetische Füllstoffe wie Carbonyl-Eisenpulver.

Weichmacher im Sinne der Erfindung sind z.B langkettige Ester oder Ether oder Mineralöle (paraffinische, naphthenische oder synthetische Öle).

Hilfsmittel im Sinne der Erfindung sind z.B. Dispergierhilfsmittel, wie z.B. Fettsäuren, Stearinsäure und/oder Ölsäure.

Bevorzugt weist dabei der Vernetzungsbatch die folgende Zusammensetzung auf:
Zinkoxid (ca. 10% bis 50% ), Schwefel, CBS (Cyclohexyl-Benzozthiazyl-Sulfenamid, ca. 10% bis 30%) und/oder MBTS (Methylbenzothiazyldisulfid, ca. 10% bis 30%), und/oder ZBOP (ca. 10 bis 30%), EPDM/EPM, EVA und/oder Weichmacher (ca. 20%) zusammen mit mindestens einer markierenden pulverförmigen Substanz (ca. 10%), wobei sich die Angaben auf Gewichtsprozente beziehen und die Summe der eingesetzten Komponenten 100% beträgt.

Diese Mischung hat einen gegenüber den Einzelkomponenten deutlich erniedrigten Schmelzpunkt von weniger als 100°C, wobei der Schmelzpunkte der Einzelkomponenten wie folgt sind:
Schwefel (Schmelzpunkt: ca. 115°C), CBS (Schmelzpunkt: ca. 100°C) und MBTS (Schmelzpunkt: ca. 180°C).
Demnach sind diese als Einzelkomponenten bei T < 100°C deutlich schlechter verarbeitbar.

Die erfindungsgemäßen Vernetzerbatches lassen sich dabei herstellen, in dem die Vernetzungsmittel mit den markierenden Substanzen, dem Polymer, und gegebenenfalls zusätzlich Stabilisatoren und/oder Füllstoffe sowie gegebenenfalls weiteren Hilfsmitteln bei Temperaturen ≤ 100°C miteinander vermischt werden. Idealerweise geschieht dies so, dass keine Reaktion der Vernetzungsmittel während des Vermischens stattfindet.

Auf diese Weise kann problemlos eine sehr homogene Mischung der Vernetzungsmittel mit den markierenden Substanzen, dem Polymer und gegebenenfalls weiteren Zusatzstoffen und Hilfsmitteln hergestellt werden. Dabei können alle üblichen Mischaggregate, wie Innenmischer, Extruder, Doppelschneckenextruder oder ähnliches eingesetzt werden.

Gegenstand der vorliegenden Erfindung ist zudem ein Verfahren zur Herstellung der erfindungsgemäßen Vernetzerbatches, wonach das Vernetzungsmittel mit den markierenden Substanzen, dem Polymer und gegebenenfalls zusätzlich Stabilisatoren und/oder Füllstoffe sowie gegebenenfalls weiteren Hilfsmitteln bei Temperaturen ≤ 100°C miteinander vermischt werden.

Ein weiterer Gegenstand der Erfindung sind vernetzbare Kautschukmischungen, enthaltend die erfindungemäßen und oben beschriebenen Vernetzerbatches.

Bei der vernetzbaren Kautschukmischungen im Sinne der Erfindung handelt es sich um Grundmischung, die Kautschuk enthält. Diese umfasst Polymere und deren Verschnitte, die nach Vernetzung elastische Eigenschaften aufweisen, wie z.B. Naturkautschuk (NR), Isoprenkautschuk (IR), Styrol-Butadien-Kautschuk (SBR), Butadienkautschuk (BR), Isopren-Isobutylen-Kautschuk (IIR), Polychloroprenkautschuk (CR), Acrylnitril-Butadien-Kautschuk (NBR), hydrierten Acrylnitril-Butadien-Kautschuk (HNBR), carboxylierten Acrylnitril-Butadien-Kautschuk (XNBR), hydrierten carboxylierten Acrylnitril-Butadien-Kautschuk (HXNBR), Ethylen-Propylen-Dien-Kautschuk (EPDM), Ethylen-Propylen-Kautschuk (EPM), Fluorkautschuk (FKM), perfluorierten Fluorkautschuk (FFKM), Acrylat-Ethylen-Kautschuk (AEM), Acrylatkautschuk (ACM), chloriertes Polyethylen, chlorsulfoniertes Polyethylen, Ethylen-Vinylacetat-Kautschuk (EVA), Siliconkautschuk, Fluoro-Silicon-Kautschuk, Ethylen-Epichlorhydrin Kautschuk (ECO), Epichlorhydrin-Kautschuk (CO) und/oder Polyurethan-Kautschuk (PU).

Weitere Bestandteile der vernetzbare Kautschukmischungen sind insbesondere helle anorganische Füllstoffe, wie z.B. Glimmer, Kaolin, Kieselerde, Kieselsäure, Kreide, Talkum, Kohlenstoff- Füllstoffe, wie Ruß, Graphit, Carbon Nanotubes und/oder magnetische Füllstoffe wie Carbonyl-Eisenpulver, Eisenoxide und/ oder verfärbende und nicht verfärbende Alterungsschutzmittel, wie Paraphenylendiamine (Isopropylphenylparaphenylendiamin/(IPPD), Para-Phenylen-Diamin (6PPD), N,N-ditolyl-p-phenylendiamine (DTPD), etc.), Amine (Trimethyl-1,2-dihydrochinolin (TMQ), [Phenyl)amine]-1,4-naphthalendion (PAN), Bis(4-octylphenyl)amin (ODPA), styrolisiertes Diphenylamin (SDPA), etc. ), Mono- und Bisphenole, wie z.B. die Vulkanox-Typen 2,2'-Methylen-bis-(4-methyl-6-tert.butylphenol (BPH), 2,2'-Isobutyliden-bis-(4,6-dimethylphenol) (NKF), 2,2'-Dicyclo-pentadienyl-bis-(4-methyl-6-tert.-butyl-phenol) (SKF), 2,2'-Methylen-bis-(4-methyl-6-cyclohexyl-phenol (ZKF), 2,6-Di-tert.-butyl-p-kresol (BHT), subtituiertes Phenol (DS), styrolisierte Phenole (SPH), Mercatobenzimidazole (2-Mercaptobenzimidazol (MBI), 2-Mercaptomethylbenzimidazole (MMBI), Zinc-4-und -5-methyl-2-mercapto-benzimidazol- (ZMMBI), etc.) und Olefine und/oder paraffinische und aromatische Weichmacher, Dispergierhilfsmittel sowie gegebenenfalls einen Teil der Vernetzungsmittel (wie z.B. Zinkoxid).

Da die Vernetzungsmittel bereits homogen miteinander vermischt sind, wird durch die kontinuierliche Zudosierung eine homogene Verteilung der Vernetzungsmittel in der Grundmischung erleichtert. Insgesamt kann so die Gefahr vermindert werden, dass die angestrebte kontinuierliche Herstellung in der Praxis an dem Mischen der Grundmischung mit den Vernetzungsmitteln scheitert.

Ein weiterer Gegenstand der Erfindung ist ein Verfahren zur Herstellung einer vernetzbaren Kautschukmischung, wonach der erfindungsgemäße Vernetzerbatch kontinuierlich mit einer diskontinuierlich hergestellten Grundmischung, die Kautschuk enthält, vermischt wird.

Der Herstellung der Grundmischung erfolgt nach den, dem Fachmann geläufigen Verfahren, wie diese beispielsweise beschrieben sind in PCT/EP2009/058041.

In diese diskontinuierlich hergestellte Grundmischung wird dann kontinuierlich der Vernetzerbatch zudosiert und die fertige Mischung wird dann kontinuierlich extrudiert

Dabei beträgt vorzugsweise der Anteil an Vernetzerbatch, bezogen auf die vernetzbaren Kautschukmischung, weniger als 10 Gew%.

Bei dem erfindungsgemäßen Verfahren wird der Vernetzerbatch kontinuierlich mit der Grundmischung vermischt, was eine bevorzugte Ausführungsform darstellt. Dies kann z.B. mittels gravimetrischer Dosieraggregate mit integrierter Dosierdifferenzialwaage z.B. der Firma Brabender erfolgen.

In einer Ausführungsform der Erfindung wird der Vernetzerbatch mit hohem Druck in die Grundmischung eingebracht, die dabei insbesondere vergleichsweise drucklos gefördert wird. Ein hoher Druck im Sinne der vorliegenden Erfindung beträgt insbesondere mehrere 10 bar, vorzugsweise wenigstens 50 bar, besonders bevorzugt wenigstens 100 bar. Hierdurch wird erreicht, dass allein aufgrund des hohen Zufuhrdrucks sofort Vernetzungbatch in der Grundmischung durch Verwirbelung verteilt werden, was dazu beiträgt, dass schnell eine homogene Mischung hergestellt wird.

In einer bevorzugten Ausführungsform der Erfindung werden die Vernetzungsmittel für das Vernetzen einer Mischung mit einem hohem Druck von vorzugsweise wenigstens 50 bar in eine Grundmischung gepumpt, die Kautschuk enthält, und wird anschließend die Grundmischung mit den Vernetzungsmitteln in einer Mischvorrichtung gemischt.

Vorzugsweise wird die Grundmischung in einem Extruder mit vorzugsweise nur einer Welle transportiert, während die Vernetzungsmittel mit hohem Druck in die Grundmischung gepumpt werden. Durch den großen Druckunterschied entsteht eine Verwirbelung. Ein weiteres Vermischen mit Hilfe des Extruders kann entsprechend verkürzt werden.

In einer Ausführungsform der Erfindung werden die Vernetzungsmittel mit einer Zahnradpumpe in die Grundmischung gepumpt. Mit Hilfe einer Zahnradpumpe kann einerseits der gewünschte hohe Druck erzeugt und andererseits geeignet dosiert zugeführt werden.

Gegenstand der Erfindung sind auch vernetzbaren Kautschukmischungen erhältlich nach dem vorgenannten erfindungsgemäßen Verfahren.

Ein weiterer Gegenstand der Erfindung ist zudem die Verwendung der erfindungsgemäßen Vernetzerbatches zur Kontrolle der Verteilung der Vernetzungsmittel in der Kautschukmischung, wobei die Güte der Verteilung vorzugsweise mittels Ultraschall gemessen wird, wobei auch andere Meßmethoden, wie z.B. RFA (Röntgenfluoreszenzanalyse), NIR (Nahinfrarotspektroskopie), LIPS (Laser-Induzierte Plasma Spektroskopie), Terahertz-Spektroskopie, UV/VIS-Spektroskopie nicht ausgeschossen sind.

Die nachfolgenden Beispiele dienen der Erläuterung der Erfindung, ohne dabei limitierend zu wirken.

### Ausführungsbeispiele:

Dabei wurden folgende Stoffe eingesetzt:
SMR 10 = Naturkautschuk (Standard Malaysian Rubber SMR 10),
N550 = Ruß der Firma Evonik Degussa AG,
Vivatec 500 = ein Mineralöl (TDAE-Ö1) als Weichmacher,

Dutral CO 054 = ein Ethylen-Propylen-Dienpolymer der Firma EniChem SpA,
Zinkoxid Weisssiegel, erhältlich bei der Firma Brüggemann,
Schwefelpulver, erhältlich bei der Firma Brüggemann,
MBTS = Di(benzothiazol-2-yl)disulfid, erhältlich unter dem Namen Vulcacit ® DM/C bei der Firma Lanxess Deutschland GmbH,
Rhenocure ® ZBOP/S von Rhein Chemie Rheinau GmbH,
paraffinische Weichmacher (Spindelöl R2, der Firma Shell AG),
PL Pigment MHG-4E und PL Pigment MHG-4B = dotierte Strontiumaluminate (SrAl₂O₄:Eu-2,Dy+2,B+3,), erhältlich bei der Firma LanXi MinHui Photoluminescent Co., Ltd. Sicopal Schwarz K0095 = Chromeisenoxid, erhältlich bei der Firma BASF AG, 5,2 g/ml, Hostasol Yellow 3G = fluoreszierenden Naphthalimid, erhältlich bei der Clariant AG, Hostasol Red 5B = Thioindigoid Colorant, erhältlich bei der Clariant AG.

Angaben in phr betreffen Angaben in Gewichtsteilen pro 100 Gewichtsteile Kautschuk

### Ausführugesbeispiel 1:

Eine granulierte Kautschukmischung KM mit einer Mooney-Viskosität ML 1+4 (100°C) = 60 MU, bestehend aus 100 phr Naturkautschuk SMR 10, 55 phr Furnaceruß N550, 5 phr Weichmacher (Vivatec 500) und 1 phr Stearinsäure, wurden mit einem Einwellenextruder (Kompaktextruder der Firma Brabender) bei T = 90°C mit 60 U/min extrudiert. Der Durchsatz betrug ca. 1 kg/h. Der Extruderstreifen war ca. 5 cm breit und 4 mm dick. Die Messdüse war mit zwei Ultraschallwandlern der Firma Krautkrämer ausgerüstet. Die mittlere Frequenz des Schallgebers betrug 5 MHz. Es wurde die Amplitudendämpfung während der Extrusion des Extruderstreifens zwischen dem Ultraschallgeber und dem Ultraschallempfänger im Puls-Transmission-Verfahren ermittelt. Der Abstand zwischen Ultraschallgeber und -empfänger betrug dabei 4 mm. Es wurden zwei Messungen mit einer unterschiedlichen Dosierung des Vernetzerbatches VB 1 durchgeführt.

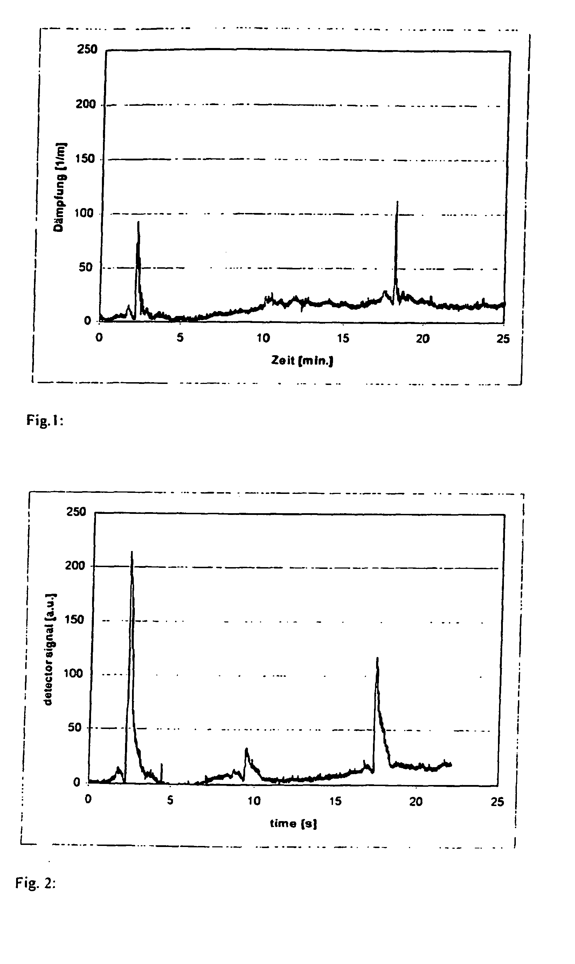

In Abb. 1 ist der zeitliche Verlauf des Ultraschallsignals (Dämpfung) über alle 2 Messungen wiedergegeben. Die Variation (Drift der Basislinie) während der Extrusion der Kautschukmischung ist geringfügig < 20 m-1. Das Grundrauschen der Basislinie beträgt ca. 1 m⁻¹.

Zusätzlich zur Kautschukmischung wurden ca. 3,2 g des erfindungsgemäßen Vernetzerbatches VB 1 (Dichte = 1,75 g/ml) bestehend aus 100 phr EPM (Dutral CO 054 von EniChem SpA), 233 phr Zinkoxid Weisssiegel mit einer Dichte von 5,6 g/ml (Brüggemann), 100 phr Schwefelpulver, 100 phr MBTS (Vulcacit® DM/C Lanxess Deutschland GmbH), 53 phr eines Dithiophosphat-beschleunigers (Rhenocure ZBOP/S von Rhein Chemie Rheinau GmbH) sowie 33 phr eines paraffinischen Weichmachers (Spindelöl R2, Shell) zugefüttert (Pulseingabe). Die Mischwirkung des Einwellenextruders ist gering, was sich dadurch zeigt, dass. ein steil ansteigendes und sofort wieder abfallendes Antwortsignal nach Zugabe des Vernetzerbatches VB 1 in Peakform bei t = 3 min. detektiert. Die Peakhöhe beträgt ca. 100 m⁻¹. Das Antwortsignal ist auf die Änderung der Dämpfungseigenschaften aufgrund der geänderten Zusammensetzung des Extruderstreifens (Zugabe des Vernetzerbatches VB1) zurückzuführen.

Bei Zugabe von ca. 1,6 g des erfindungsgemäßen Vernetzerbatches VB 1 wird wieder ein intensiveres Signal bei t = 18 min. detektiert. Die Peakhöhe beträgt wieder ca. 100 m-1. Aufgrund der geringeren Zugabemenge des Vernetzerbatches VB 1 ist die Halbwertsbreite des Peaks dabei schmaler als diejenige des Peaks bei t = 3 min (Zugabe von 3 g CB1). Zudem liegt die Basislinie etwas höher.

Die Messungen zeigen, dass mit Hilfe der Ultraschalltechnik der erfindungsgemäße Vernetzerbatch VB1 detektiert werden kann.

### Ausführungsbeispiel 2:

Entsprechend Ausführungsbeispiel 1 wurde die Kautschukmischung KM mit einer Mooney-Viskosität ML 1+4 (100°C) = 60 MU bestehend aus 100 phr Naturkautschuk SMR 10, 55 phr Furnaceruß N550, 5 phr Weichmacher (Vivatec 500) und 1 phr Stearinsäure extrudiert. Das Extrudat wurde wie in Ausführungsbeispiel 1 mit den Ultraschallwandlern analysiert.

Zu der Kautschukmischung KM wurde der erfindungsgemäße Vernetzerbatch VB2 in den nachstehend aufgeführten Mengen wie in Ausführungsbeispiel 1 zugefüttert (Pulszugabe). Der Vernetzerbatch VB2 besteht aus den in Ausführungsbeispiel 1 genannten Bestandteilen 100 phr EPM Dutral CO 054 von EniChem SpA, 156 phr Zinkoxid (Weisssiegel von Brüggemann), 67 phr Schwefelpulver, 67 phr MBTS (Vulcacit® DM/C Lanxess Deutschland GmbH), 36 phr eines Dithiophosphatbeschleunigers (Rhenocure ® ZBOP/S von Rhein Chemie Rheinau GmbH) sowie 33 phr eines paraffinischen Weichmachers (Spindelöl R2, Shell). Zusätzlich enthält der Vernetzerbatch CB2 weitere Markierungssubstanzen jeweils mit einem Anteil von 33 phr: Carbonyleisenpulver CM standard grade (BASF, 7,9 g/ml), 2 lumineszierende Pigmente aus Europium/Dysprosium/Bor dotierten Strontiumaluminaten mit einer Dichte von 3,6 g/ml(PL Pigment MHG-4E und PL Pigment MHG-4B LanXi MinHui Photoluminescent Co., Ltd. Jeweils 3,6 g/ml) mit unterschiedlicher mittlerer Partikelgröße, Chromeisenoxid (Sicopal Schwarz K0095 BAS mit 5,2 g/ml), einem fluoreszierenden Naphthalimid (Hostasol Yellow 3G, 1,17 g/ml) und einem fluoreszierenden Thioindigoid Colorant (Hostasol Red 5B, Clariant, 1,6 g/ml). Der Anteil an Pulverchemikalien mit einer Dichte > 3 g/ml beträgt 43%. Die Dichte des Vernetzerbatches VB2 beträgt 1,79 g/ml und ist vergleichbar mit dem Vernetzerbatch 1 aus Ausführungsbeispiel 1.

In Abb. 2 ist der zeitliche Verlauf des Ultraschallsignals während der Extrusion der Grundmischung dargestellt. Wie in Ausführungsbeispiel 1 ist die Variation (Drift der Basislinie) während der Extrusion der Kautschukmischung geringfügig < 20 m⁻¹. Das Grundrauschen der Basislinie beträgt ca. 1 m⁻¹.
Es wurden 3 Messungen mit unterschiedlichen Dosiermengen an erfindungsgemäßem Vernetzerbatch VB2 durchgeführt.
Bei Zufütterung (Pulseingabe) von 3,2 g VB2 wird ein Peak bei t = 3 min. mit einer Höhe von 210 m-1 detektiert. Bei Zufütterung von 0,3 g VB 2 beträgt das Ultraschallsignal bei t = 10 min. ca. 30 1/m und nach Zufütterung von 1,7 g VB2 beträgt Ultraschallsignal bei t = 18 min. ca. 110 m-1. Das Ultraschallsignal ist damit proportional der zudosierten Menge an Vernetzerbatch VB2. Mit Ultraschall kann damit die Menge an Vernetzerbatch in einer Kautschukmischung detektiert werden.

Im Vergleich von Abb,1 und Abb. 2 zeigt sich zudem, dass bei gleicher Dosierung der Vernetzerbatche VB1 und VB2 die Dämpfung (Peakhöhe) für den Vernetzerbatch VB2 deutlich größer ist als diejenige von VB1. Selbst bei der geringen Zufütterung von 0,3 g VB 2 kann das Signal in Abb. 2 deutlich vom Basisliniendrift unterschieden werden. Die höhere Dämpfung des Vernetzerbatches VB2 kann dabei nicht auf eine unterschiedliche Dichte der beiden Vernetzerbatche zurück geführt werden. Der Unterschied zwischen der aus den Einzelkomponenten berechneten Dichte des VB1 mit 1,75 g/ml und des VB 2 mit 1,79 g/ml ist gering. Die Anteile an Pulverchemikalien mit einer Dichte > 3 g/ml sind mit 37% (nur ZnO) für VB1 und 43% (ZnO, Eisencarbonyl, Chromeisenoxid und dotierten Strontiumaluminaten) ebenfalls vergleichbar. Daher wird die höhere Dämpfung auf das Vorhandensein des Carbonyleisenpulvers mit einer Dichte von 7,9 g/ml zurückgeführt. Offensichtlich ist der Effekt von schweren Partikeln auf die Empfindlichkeit der Messmethode (Intensität des Ultraschallsignales) deutlich stärker ausgeprägt als bei den hier verwendeten weniger schweren Markienrngssubstanzen.

### Ausführungsbeispiel 3:

Wie in Ausführungsbeispiel 1 wird zunächst die Kautschukmischung KM zum Extruder zugefüttert. Ab dem Zeitpunkt t = 0 min. wird von der Zufütterung der Kautschukmischung auf die Zufütterung der vernetzbaren Kautschukmischung VKM gewechselt.

Die vernetzbare Kautschukmischung wurde vorab nach herkömmlichen Walzenverfahren hergestellt aus 161 phr der Kautschukmischung KM und 14,3 phr des Vernetzerbatches VB2. Die Mischzeit auf der Walze betrug dabei 10 min, sodass eine homogene Verteilung der Vernetzungschemikaien und der Markersubstanzen des Vernetzerbatches VB2 in der vernetzbaren Kautschukmischung sicher gestellt ist.

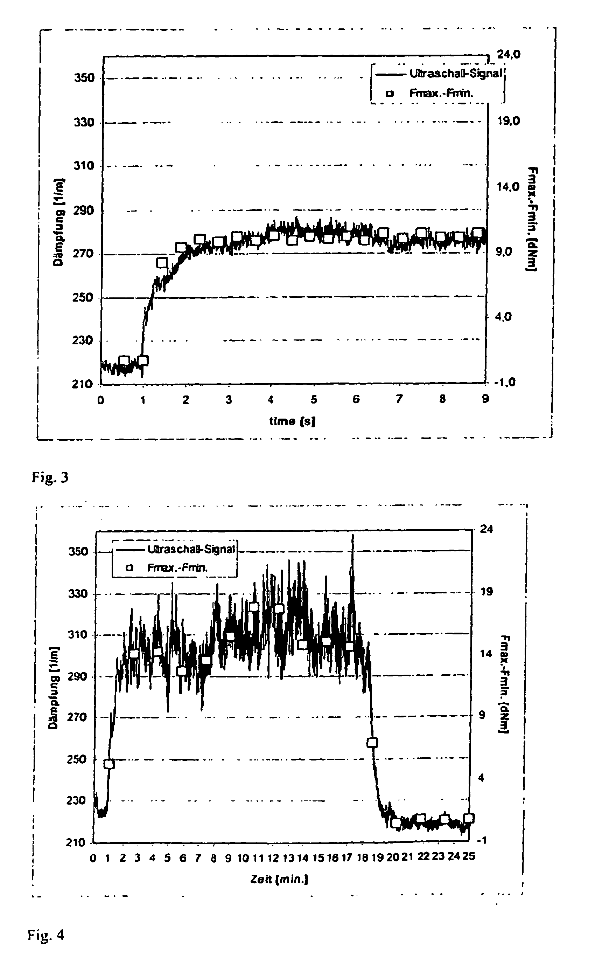

Der extrudierte Streifen wird wie in Ausführungsbeispiel 1 inline mit Hilfe zweier Ultraschallwandler analysiert. Der zeitliche Verlauf der Dämpfung des Ultraschalls durch den Extruderstreifen ist ab t = 0 min. sind in Abb. 3 dargestellt.

Zum Zeitpunkt t = 0 min. befindet sich noch die Kautschukmischung KM in der Messdüse. Ab dem Zeitpunkt t = 1 min. erreicht die vernetzbare Kautschukmischung VKM die Ultraschallmesskammer. Das Ultraschallsignal (Dämpfung) steigt an insbesondere aufgrund der vorhandenen Markierungssubstanzen im Vernetzerbatch VB2. Nach kurzer Zeit erreicht das Signal ein Plateau. Die Ultraschall-Messdüse ist vollständig mit der vernetzbaren Kautschukmischung gefüllt. Es wird kontinuierlich die vernetzbare Kautschukmischung zugefüttert. Das Ultraschallsignal bleibt zeitlich konstant. Es sind nur geringe Variationen im Bereich von ca. 10 bis 20 m⁻¹ erkennbar entsprechend einer vernetzbaren Kautschukmischung, in der die Verteilung der Vernetzungsmittel und der Markierungssubstanzen homogen ist.

Nach Abschluss des Experimentes wird der extrudierte Streifen in 7 g Portionen unterteilt. Diese Proben wurden in einem Vulkameter MDR der Firma Alpha Technologies bei 160°C für 15 min. vulkanisiert. Die Bestimmung der Vulkameterkurven entspricht der offline Qualitätskontrolle bei der diskontinuierlichen Herstellung von vernetzbaren Kautschukmischungen. Aus den so bestimmten Vulkameterkurven wurde die Differenz Fₘₐₓ-Fₘᵢₙ des maximalen und des minimalen Drehmomentes ermittelt. Diese Differenz ist proportional des Anteils an Vernetzungsmittel. In Abb. 3 wurden die Werte Fₘₐₓ-Fₘᵢₙ der jeweiligen Proben dem Zeitverlauf des Ultraschall-signales zugeordnet. Zunächst (t < 1 min.) ist Fₘₐₓ-Fₘᵢₙ nahe null, da die Kautschukmischung KM keine Vernetzungsmittel enthält. Ab t 1 min. steigen die Werte Fₘₐₓ-Fₘᵢₙ an und erreichen ebenfalls ein Plateau. Der zeitliche Verlauf der Werte Fₘₐₓ-Fₘᵢₙ stimmt mit dem Ultraschallsignal überein. Die mittlere Streubreite für Fₘₐₓ-Fₘᵢₙ ist wie für eine homogene Verteilung der Vernetzungsmittel erwartet mit < 1 % sehr gering. Mit dem gleichen Verlauf der Kurven kann eindrucksvoll belegt werden, dass die erfindungegmäßen Vernetzerbatches eine Inline-spektroskopischen Kontrolle der Vernetzermischung ermöglichen. Beide Messmethoden belegen die homogene Verteilung des Vernetzerbatches VB 2 in KM.

### Austührungsbeispiel 4

Wie in Ausführungsbeispiel 1 wird die Kautschukmischung KM extrudiert und die Dämpfungseigenschaften des Extruderstreifens mit zwei Ultraschallwandlern analysiert. Im Unterschied zu Ausführungsbeispiel 3 werden ab dem Zeitpunkt t = 0 min. zu der Kautschukmischung KM Granulen des Vernetzerbatches VB2 unregelmäßig zugefüttert. Da der Einwellenextruder nur eine geringfügige Mischwirkung aufweist, entsteht zwar eine vernetzbare Kautschukmischung VKM am Ausgang des Extruders, die Verteilung der Vernetzungsmittel ist jedoch aufgrund der geringen Mischwirkung und der unregelmäßigen Dosierung sehr heterogen.

Dies zeigt sich in Abb. 4. Hier ist die Dämpfung wieder gegen die Messzeit t aufgetragen. Zunächst werden bei Zufütterung t < 1 min. der homogenen Kautschukmischung KM nur geringe Variationen des Ultraschallsignales detektiert. Bei zusätzlicher unregelmäßiger Zufütterung (t > 1 min.) von Granulen des Vernetzerbatches VB2 steigt die Dämpfung entsprechend Ausführungbeispiel 3, Abb. 3 zwar an, das Ultraschallsignal variiert jedoch sehr stark. Die Variation des Ultraschallsignales liegen im Beriech von ca. 80 m⁻¹, entsprechend einer stark inhomogen Verteilung des Vernetzterbatches VB2 bzw. einer inhomogenen Verteilung der Markierungssubstanzen. Wird die Zufütterung des Vernetzerbatches VB2 gestoppt (t > 18 min), reduziert sich die Dämpfung des Signales. Es wird wieder die ursprüngliche Basislinie der Kautschukmischung KM mit einer geringen Variation des Ultraschallsignales erhalten.

Wie in Ausführungsbeispiel 3 werden auch hier die Proben aus dem Extruderstreifen entnommen und bei 160°C für 15 min. vulkanisiert (Offline-Analyse). Die Werte aus den Vulkameterkurven Fₘₐₓ-Fₘᵢₙ werden in Abb. 4 wieder dem zeitlichen Verlauf der Extrusion zugeordnet. Es zeigt sich, dass der zeitliche Verlauf der von Fₘₐₓ-Fₘᵢₙ dem zeitlichen Verlauf des Ultraschallsignales entspricht. Die mittelere Streubreite der Werte für Fₘₐₓ-Fₘᵢₙ zwischen t = 1 min und t = 18 min. ist deutlich größer als die Streubreite in der Werte Fₘₐₓ-Fₘᵢₙ in Abb. 3 für die homogen beschleunigte Mischung.

Ausführungsbeispiel 4 zeigt im Vergleich mit Ausführungsbeispiel 3, dass mit Hilfe der inline-Ultraschallanalytik zwischen einer homogenen Verteilung und einer heterogen Verteilung des Vernetzbatches VB2 unterschieden werden kann. Die hohe Empfindlichkeit der Messungen wird dabei durch die Markierungssubsubstanzen (bei VB2 insbesondere Eisenpulver) mit einer hohen Dichte > 3 g/ml gewährleistet. Die Ergebnisse mit der Ultraschall-Inline-Analytik korrelieren mit den Ergebnissen der Vulkameterkurven (herkömmliche offline-Qualitätskontrolle für beschleunigte Kautschukmischungen).

## Patentansprüche

1. Vernetzerbatch bestehend im wesentlichen aus :
- mindestens einer zur Detektion mittels Ultraschall, Röntgenfluoreszenzanalyse, Nahinfrarotspektroskopie, Laser-Induzierte Plasma Spektroskopie, Terahertz-Spektroskopie und UV/VIS-Spektroskopice geeigneten markierenden, bei Temperaturen < 130°C festen pulverförmigen Substanz mit einer Dichte größer 2 g/cm³, ausgewählt aus der Gruppe der Alkali- und Erdalkaliverbindungen, Verbindungen der Nebengruppen des Periodensystems der Elemente, Verbindungen der Seltenen Erden, Schwermetallpulver, Metalipulver und/oder deren Verbindungen, Bleiverbindungen, anorganische Bismutverbindungen, Metall-Carbide und/oder natürlich vorkommenden Mineralien,
- mindestens einem Vernetzungsmittel ausgewählt aus der Gruppe Schwefel, Peroxide, Metalloxide, Dithiocarbamate, Thiurame, Thioharnstoffe, Mercaptobeschleuniger, Sulfenamide, Thiophosphat-und Dithiophosphat-Beschleuniger und/oderGuanidine, einem Polymer ausgewählt aus der Gruppe:
Naturkautschuk (NR), Isoprenkautschuk (IR), Styrol-Butadien-Kautschuk (SBR), Butadienkautschuk (BR), Isopren-isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxyliertere Acrylnitril-Butadien-Kautschuk (HXNBR), Ethylen-Propylen-Dien-Kautschuk (EPDM), Ethylen-Propylen-Kautschuk (EPM), Fluorkautschuk (FKM), Perfluorierter Fluorkautschuk (FFKM), Acrylat-Ethylen-Kautschuk (AEM), Acrylatkautschuk (ACM), Ethylen-Methylen-Acrylatkautschuk (EMA), chloriertes Polyethylen, chlorsulfoniertes Polyethylen, Ethylen-Vinylacetat-Kautschuk (EVA), Ethylen-Epichlorhydrin Kautschuk (ECO), Epichlorhydrin-Kautschuk (CO) und/oder Polyurethan-Kautschuk (PU), und
- gegebenenfalls Weichmachern, Stabilisatoren, Füllstoffen und/oder weiteren Hilfsmitteln.

2. Vernetzerbatch nach Anspruch 1, **dadurch gekennzeichnet, dass** als markierende Substanzen Aluminate, Halogenide, Sulfate, Silikate, Carbonate, Oxide und/oder Sulfide des Cäsiums, Calciums, Strontiums und/oder des Bariums, Bariumsulfat, Bariumoxid, Bariumsulfid, Bariumsilikat, Strontiumaluminate, Zinkoxid, Zinksulfid, Titandioxid und/oder Zirkondioxid, Ceroxide und/oder Gadoliniumoxide, Carbonyleisenpulver, Tantalpulver, Wolframpulver, Goldpulver, Platinpulver und/oder Iridiumpulver, phosphatiertes oder mit Siliziumdioxid gecoatetes Eisenpulver, Bleioxide und/oder Bleisulfide, Bismutoxide sowie Bismutsulfide, Wolframate, Wolframoxide und/oder- Wolframsulfide, Wolframcarbide und/oder Antimonit, Apatit, Albit, Argentit, Anglesit, Arsenkies, Baryt, Bleiglanz, Cassisterit, Dolomit, Feldspat, Flussspat, Molybdänglanz, Muskovit, Montmorilonit, Monazit, Magensit, Korund, Kryollith, Pyrit, Quarz, Rutil, Scheelit, Speerylith, Strontianit, Tamntalit, Uraninit, Vanadinit, Wismut, Wolframit, Wollastonit, Willemit, Zinnober und/oder Zirkon eingesetzt werden.

3. Vernetzerbatch nach einem der Ansprüche 1 bis 2, **dadurch gekennzeichnet, dass** dieser Stabilisatoren und/oder Füllstoffe und gegebenenfalls weitere Hilfsmittel enthält.

4. Verfahren zur Herstellung eines Vernetzerbatches nach einem der Ansprüche 1 bis 3, **dadurch gekennzeichnet, dass** das Vernetzungsmittel mit den markierenden Substanzen, dem Polymer und gegebenenfalls zusätzlich Stabilisatoren und/oder Füllstoffe sowie gegebenenfalls weiteren Hilfsmitteln, bei Temperaturen ≤ 100°C miteinander vermischt werden.

5. Vernetzbaren Kautschukmischung enthaltend einen Vernetzerbatch nach einem der Ansprüche 1 bis 3.

6. Verfahren zur Herstellung einer vernetzbaren Kautschukmischung, **dadurch gekennzeichnet, dass** der Vernetzerbatch nach einem der Ansprüche 1 bis 3 mit einer diskontinuierlich hergestellten Grundmischung, die Kautschuk enthält, kontinuierlich vermischt werden.

7. Vernetzbaren Kautschukmischungen, erhältlich nach dem Verfahren nach Anspruch 6.

8. Verwendung der Vernetzerbatches nach einem oder mehreren der Ansprüche 1 bis 3 zur Kontrolle der Verteilung der Vernetzungsmittel in der Kautschukmischung.

## Claims

1. A crosslinking agent masterbatch consisting essentially of:
- at least one pulverulent marker substance which is solid at temperatures < 130°C, has a density greater than 2 g/cm³ and is suitable for detection by means of ultrasound, X-ray fluorescence analysis, near-infrared spectroscopy, laser-induced plasma spectroscopy, terahertz spectroscopy, and UV/VIS spectroscopy, selected from the group of the alkali metal compounds and alkaline earth metal compounds, compounds of the transition groups of the periodic table of the elements, compounds of the rare earths, heavy metal powders, coated metal powders and/or compounds of these, lead compounds, inorganic bismuth compounds, metal carbides, and/or naturally occurring minerals,
- at least one crosslinking agent selected from the group of sulfur, peroxides, metal oxides, dithiocarbamates, thiurams, thioureas, mercapto accelerators, sulfenamides, thiophosphate accelerators and dithiophosphate accelerators, and/or guanidines,
- a polymer selected from the group of:
natural rubber (NR), isoprene rubber (IR), styrene-butadiene rubber (SBR), butadiene rubber (BR), isoprene-isobutylene rubber (IIR), polychloroprene rubber (CR), acrylonitrile-butadiene rubber (NBR), hydrogenated acrylonitrile-butadiene rubber (HNBR), carboxylated acrylonitrile-butadiene rubber (XNBR), hydrogenated carboxylated acrylonitrile-butadiene rubber (HXNBR), ethylene-propylene-diene rubber (EPDM), ethylene-propylene rubber (EPM), fluoro rubber (FKM), perfluorinated fluoro rubber (FFKM), acrylate-ethylene rubber (AEM), acrylate rubber (ACM), ethylene-methylene-acrylate rubber (EMA), chlorinated polyethylene, chlorosulfonated polyethylene, ethylene-vinyl acetate rubber (EVA), ethylene-epichlorohydrin rubber (ECO), epichlorohydrin rubber (CO), and/or polyurethane rubber (PU), and
- optionally plasticizers, stabilizers, fillers and/or further auxiliaries.

2. The crosslinking agent masterbatch as claimed in claim 1, **characterized in that** marker substances used comprise: aluminates, halides, sulfates, silicates, carbonates, oxides, and/or sulfides of caesium, of calcium, of strontium, and/or of barium, barium sulfate, barium oxide, barium sulfide, barium silicate, strontium aluminates, zinc oxide, zinc sulfide, titanium dioxide and/or zirconium dioxide, cerium oxides, and/or gadolinium oxides, carbonyl iron powder, tantalum powder, tungsten powder, gold powder, platinum powder, and/or iridium powder, phosphated or silicon-dioxide-coated iron powder, lead oxides, and/or lead sulfides, bismuth oxides, and also bismuth sulfides, tungstates, tungsten oxides, and/or tungsten sulfides, tungsten carbides, and/or antimonite, apatite, albite, argentite, anglesite, arsenopyrite, baryte, galena, cassiterite, dolomite, feldspar, fluorite, molybdenite, muscovite, montmorillonite, monazite, magnesite, corundum, cryolite, pyrite, quartz,
rutile, scheelite, sperrylite, strontianite, tantalite, uraninite, vanadinite, bismuth, wolframite, wollastonite, willemite, cinnabar, and/or zircon.

3. The crosslinking agent masterbatch as claimed in either of claims 1 and 2, **characterized in that** this comprises stabilizers, and/or fillers, and optionally further auxiliaries.

4. A process for producing a crosslinking agent masterbatch as claimed in any of claims 1 to 3, **characterized in that** the crosslinking agent is mixed with the marker substances, the polymer and optionally also stabilizers, and/or fillers, and also optionally further auxiliaries, at temperatures ≤ 100°C.

5. A crosslinkable rubber mixture comprising a crosslinking agent masterbatch as claimed in any of claims 1 to 3.

6. A process for producing a crosslinkable rubber mixture, **characterized in that** the crosslinking agent masterbatch as claimed in any of claims 1 to 3 is continuously mixed with a parent mixture which has been produced batchwise and which comprises rubber.

7. A crosslinkable rubber mixture obtainable by the process as claimed in claim 6.

8. The use of the crosslinking agent masterbatch as claimed in one or more of claims 1 to 3 for controlling the dispersion of the crosslinking agents in a rubber mixture.

## Revendications

1. Lot de réticulation, essentiellement constitué par :
- au moins une substance sous forme de poudre marquante appropriée pour la détection par ultrason, analyse de fluorescence des rayons X, spectroscopie proche infrarouge, spectroscopie sur plasma induit par laser, spectroscopie térahertz et spectroscopie UV/VIS, solide à des températures < 130 °C, d'une densité supérieure à 2 g/cm³, choisie dans le groupe des composés alcalins et alcalino-terreux, des composés des groupes de transition du tableau périodique des éléments, des composés des terres rares, des poudres de métaux lourds, des poudres métalliques revêtues et/ou leurs composés, des composés de plomb, des composés de bismuth inorganiques, des carbures de métaux et/ou des minéraux naturels,
- au moins un agent de réticulation choisi dans le groupe constitué par le soufre, les peroxydes, les oxydes de métaux, les dithiocarbamates, les thiurames, les thiourées, les accélérateurs mercapto, les sulfénamides, les accélérateurs thiophosphate et dithiophosphate et/ou les guanidines, un polymère choisi dans le groupe :
caoutchouc naturel (NR), caoutchouc d'isoprène (IR), caoutchouc de styrène-butadiène (SBR), caoutchouc de butadiène (BR), caoutchouc d'isoprène-isobutylène (IIR), caoutchouc de polychloroprène (CR), caoutchouc d'acrylonitrile-butadiène (NBR), caoutchouc d'acrylonitrile-butadiène hydrogéné (HNBR), caoutchouc d'acrylonitrile-butadiène carboxylé (XNBR), caoutchouc d'acrylonitrile-butadiène carboxylé hydrogéné (HXNBR), caoutchouc d'éthylène-propylène-diène (EPDM), caoutchouc d'éthylène-propylène (EPM), caoutchouc fluoré (FKM), caoutchouc fluoré perfluoré (FFKM), caoutchouc d'acrylate-éthylène (AEM), caoutchouc d'acrylate (ACM), caoutchouc d'éthylène-méthylène-acrylate (EMA), polyéthylène chloré, polyéthylène chlorosulfoné, caoutchouc d'éthylène-acétate de vinyle (EVA), caoutchouc d'éthylène-épichlorhydrine (ECO), caoutchouc d'épichlorhydrine (CO) et/ou caoutchouc de polyuréthane (PU), et
- éventuellement des plastifiants, des stabilisateurs, des charges et/ou d'autres adjuvants.

2. Lot de réticulation selon la revendication 1, **caractérisé en ce que** des aluminates, des halogénures, des sulfates, des silicates, des carbonates, des oxydes et/ou des sulfures de césium, de calcium, de strontium et/ou de baryum, du sulfate de baryum, de l'oxyde de baryum, du sulfure de baryum, du silicate de baryum, des aluminates de strontium, de l'oxyde de zinc, du sulfure de zinc, du dioxyde de titane et/ou du dioxyde de zirconium, des oxydes de cérium et/ou des oxydes de gadolinium, une poudre de carbonyle de fer, une poudre de tantale, une poudre de tungstène, une poudre d'or, une poudre de platine et/ou une poudre d'iridium, une poudre de fer phosphatée ou revêtue avec du dioxyde de silicium, des oxydes de plomb et/ou des sulfures de plomb, des oxydes de bismuth, ainsi que des sulfures de bismuth, des tungstates, des oxydes de tungstène et/ou des sulfures de tungstène, des carbures de tungstène et/ou de l'antimonite, de l'apatite, de l'albite, de l'argentite, de l'anglésite, de l'arsénopyrite, de la baryte, de la galène, de la cassitérite, de la dolomite, du feldspath, de la fluorine, de la molybdénite, de la muscovite, de la montmorillonite, de la monazite, de la magnésite, du corindon, de la cryolithe, de la pyrite, du quartz, du rutile, de la scheelite, de la sperrylithe, de la strontianite, de la tantalite, de l'uraninite, de la vanadinite, du bismuth, de la tungstite, de la wollastonite, de la willémite, du cinabre et/ou de la zircone sont utilisés en tant que substances marquantes.

3. Lot de réticulation selon l'une quelconque des revendications 1 et 2, **caractérisé en ce que** celui-ci contient des stabilisateurs et/ou des charges et éventuellement d'autres adjuvants.

4. Procédé de fabrication d'un lot de réticulation selon l'une quelconque des revendications 1 à 3, **caractérisé en ce que** l'agent de réticulation est mélangé avec les substances marquantes, le polymère et éventuellement également des stabilisateurs et/ou des charges, ainsi qu'éventuellement d'autres adjuvants, à des températures ≤ 100 °C.

5. Mélange de caoutchouc réticulable contenant un lot de réticulation selon l'une quelconque des revendications 1 à 3.

6. Procédé de fabrication d'un mélange de caoutchouc réticulable, **caractérisé en ce que** le lot de réticulation selon l'une quelconque des revendications 1 à 3 est mélangé en continu avec un mélange de base contenant un caoutchouc, fabriqué de manière discontinue.

7. Mélanges de caoutchouc réticulables, pouvant être obtenus par le procédé selon la revendication 6.

8. Utilisation du lot de réticulation selon une ou plusieurs des revendications 1 à 3 pour contrôler la répartition des agents de réticulation dans le mélange de caoutchouc.
